# EUROPÄISCHE PATENTSCHRIFT

(11) **EP 1 378 484 B1**
(45) Veröffentlichungstag und Bekanntmachung des Hinweises auf die Patenterteilung: **13.04.2005**
(21) Anmeldenummer: 03090200.1
(22) Anmeldetag: 13.12.1997
(51) Int. Cl.: B67D 1/00, F17C 13/04, F17C 5/02, B67D 1/08

(54) **Kupplung und Kupplungseinrichtung einer Karbonisiervorrichtung**
Coupling system for a carbonating apparatus
Système de liaison pour une installation de carbonation

(30) Priorität: 13.12.1996 DE 29622248 U; 15.07.1997 DE 29712913 U; 15.07.1997 DE 29712912 U
(43) Veröffentlichungstag der Anmeldung: 07.01.2004
(62) Teilanmeldung aus: 97954398.0
(73) Patentinhaber: DS Produkte Dieter Schwarz GmbH, 22145 Hamburg (DE)
(72) Erfinder: Schwarz, Dieter, 23816 Bebensee (DE)
(74) Vertreter: Patentanwälte Wenzel & Kalkoff

(56) Entgegenhaltungen:
- EP-A- 0 383 495
- DE-A- 4 231 848
- FR-A- 2 145 811
- GB-A- 2 200 571
- US-A- 3 953 550

## Beschreibung

Die Erfindung betrifft eine Kupplung zum Anschließen einer Gasflasche an eine Gaszufuhrleitung in einer Vorrichtung zum Karbonisieren von in einer mit einer verschließbaren, im Halsbereich angeordneten Ausgießöffnung sowie einer Gaseintrittsöffnung versehenen verschlossenen Flasche enthaltener Flüssigkeit, wobei die Vorrichtung ausgestattet ist mit einer dichtend mit der Flüssigkeits-Flasche verbindbaren Gasseinblaseininer dichtend mit der Flüssigkeits-Flasche verbindbaren Gaseinblaseinrichtung zum Einblasen von Gas in die Flüssigkeit, einer Einrichtung zum Halten der Flüssigkeits-Flasche in einer vorbestimmten Stellung, in der die Gaseinblaseinrichtung mit der Flüssigkeits-Flasche funktionell verbunden ist, einem die Flüssigkeits-Flasche mindestens teilweise umgebenden Gehäuse zur Aufnahme mindestens der Flüssigkeits-Flasche in besagter Stellung, einem von außen zugänglichen Bedienungselement zum Öffnen der Gaseinblaseinrichtung sowie zum Öffnen eines Gas aus der angeschlossenen Gasflasche auslassenden Gasauslaßventils und eines an dem Gehäuse sitzenden, mit einer Gasflasche verbindbaren Gaszufuhranschluß für in die Flüssigkeits-Flasche einzublasendes Gas, wobei der Gaszufuhranschluß ein Anschlußteil der Kupplung aufweist, das die Gasflasche in der Kupplungsverbindung hält, wobei der Gasweg in der Kupplung nach dem Herstellen der Kupplungsverbindung durch Öffnen des Gasauslaßventils mittels des Bedienungselements geöffnet wird. Die Erfindung bezieht sich auch auf Kupplungseinrichtungen einer solchen Kupplung.

Bei einer eine genannte Kupplung aufweisenden Vorrichtung (EP-B1-0 172 815) wird das Gas in den Flüssigkeitsbehälter über eine am (oben sitzenden) Hals der Flasche angeordnete Ventileinrichtung von einer ebenfalls in der Vorrichtung gelagerten Gasflasche her zugeführt. Dichtung der Gasflasche und des Flüssigkeitsbehälters befinden sich in unmittelbarer Nachbarschaft im oberen Teil der Vorrichtung. Zum Einführen des Gases und zur Verteilung desselben in der Flüssigkeit nach Durchtritt durch die dichtende Ventilanordnung ist eine sich von der Dichteinrichtung abwärts erstreckende Gaseinblaseeinrichtung mit einer sich von einem Schwimmer nach unten erstreckenden Düse vorgesehen. Die Kupplung weist ein an der Gasflasche befestigtes Ventil mit einem Außengewinde auf, mittels dessen es in eine Gewindebohrung eines Gaszufuhranschlusses geschraubt wird, um die Gasflasche an eine Gaszufuhrleitung anzuschließen.

Auch sind nicht gattungsgemäße Einrichtungen bekannt (US 4 481 986), in denen Flaschen oder ähnliche zu begasende Gefäße in umgekehrter Lage, d.h. mit Hals und Öffnung nach unten, an eine Karbonisiergasquelle angeschlossen werden. Eine Gaseinblaseinrichtung, die hinreichend druckgesichert sein muß, reicht in den Flaschenhals hinein. Eine die Karbonisierungsquelle bildende Gasflasche ist gleichermaßen in umgekehrter Lage angeordnet. Der ein Ventil aufweisende Flaschenhals wird mittels einer Dichtung in einem einen hochstehenden Stift aufweisenden Sockel nach unten und oben bewegbar gelagert. In einer solchen Kupplung kommt es auf das selbsttätige Heben und Senken der Gasflasche an, um das Ventil in Abhängigkeit von sich veränderndem Gasdruck zum Druckausgleich zu öffnen und zu schließen. Besonders anfällig sind die Dichtung in Form von O-Ringen und der gegen das Flaschengewicht arbeitende Öffnungsstift.

Kupplungsvorrichtungen sind auch in EP 0 383 495; US 3 953 550; GB 2 200 571 und FR 2 145 811 beschrieben.

Ziel der Erfindung ist es, eine Kupplung zum Anschließen einer Gasflasche in einer Karbonisierungsvorrichtung der eingangs genannten Art und eine Kupplungseinrichtung der Kupplung zum schnellen, leicht handhabbaren und funktionszuverlässigen Anschluß von austauschbar in die Vorrichtung einsetzbaren Gasflaschen zu schaffen. Insbesondere soll es möglich sein, eine Karbonisiervorrichtung der genannten Art, die an sich für Gasflaschen mit aufsetzbarem Ventil bestimmt ist, auch für solche Gasflaschen verwendbar zu machen, die bereits ein integriertes Ventil tragen. Die Erfindung wird gemäß den Ansprüchen definiert.

Ziele der Erfindung werden bei einer Kupplung der eingangs genannten Art an der Karbonisiervorrichtung dadurch erreicht, daß die Kupplung durch eine Bestandteile des Gaszufuhranschlusses aufweisende Schnellkupplung zum Anschluß einer austauschbar in die Vorrichtung einsetzbaren Gasflasche gebildet ist, umfassend eine ein Steckteil bildende Kupplungseinrichtung und als Anschlußteil ein Stutzenanschlußteil, das das Steckteil in sich form- und kraftschlüssig sowie dichtend aufnimmt, wobei das Steckteil ein die Gastlasche haltendes Teil bildet. Man erhält eine preiswert zur Verfügung stehende Kupplung mit Zusatzbauteil in Form eines Adapterteils. Es sind nicht nur unterschiedliche Flaschentypen an die Karbonisiervorrichtung anschließbar bzw. in diese aufnehmbar, sondern es sind auch die Vorteile einer schnellkuppelnden Montage nutzbar.

Die Kupplung kann in Weiterbildung der Erfindung ein Stutzenanschlußteil, ein in dieses einrastbares Steckteil sowie ein zwischen den beiden Teilen gebildetes, in der Steckverbindung zu öffnendes Ventil umfassen, wobei das Steckteil mit dem Auslaß der Gasflasche verbunden ist. Weiter kann die Ausgestaltung derart sein, daß über das Anschlußteil eine Hülse gesetzt ist, die in Steckrichtung des Steckteils gegen die Kraft einer zwischen dem Anschlußteil und der Hülse angeordneten Feder rückstellbar verschiebbar ist. Zwischen der Hülse und dem Anschlußteil ist mindestens ein Rastelement angeordnet, das bei gegen die Kraft der Feder versetzter Hülse aus einem Steckaufnahmeraum des Anschlußteils verdrängbar ist, um den Steckaufnahmeraum des Anschlußteils zum Einstecken des Steckteils freizugeben. Das Rastteil gelangt in Rastverbindung mit einer an dem Steckteil gebildeten Aufnahme und wird in der Rastposition durch die mittels der Feder zurückgesetzte Hülse arretiert. Eine solche Kupplung, die bevorzugt mit einer zugleich den oberen Teil der Gasflasche, also den Flaschenhals schützenden Kappe oder Hülse aus plastischem Material versehen sein kann, die ihrerseits als Montagehilfe dient, ermöglicht eine besonders schnelle und sichere Einsatzverbindung der Gasflasche in die zugehörige Karbonisiervorrichtung. Speziell eignet sich eine solche Kupplung zur sinnfälligen Verbindung mit einer Bewegungseinrichtung, die die Funktionsverbindung zwischen Gasflasche und Flüssigkeitsbehälter herstellt.

Nicht immer stellen jedoch solche zusätzlich auf einen Flaschenhals anzubringenden Kupplungselemente mit Ventil eine konstruktive Lösungsmöglichkeit für eine schnelle Verbindung zwischen Gasflasche und Gaszufuhranschluß der Vorrichtung dar. So wird nach einem anderen Weiterbildungsgedanken der Erfindung von der bei der Realisierung verschiedenster Karbonisiervorrichtungen gewonnene Erkenntnis ausgegangen, daß sich im Markt eine Anzahl unterschiedlicher Gasflaschenkonstruktionen wiederfmdet, die mit Hilfe von reinen, auf den Flaschenhals aufsetzbaren Steckteilen, in denen sich ein Ventil befindet, nicht einsetzbar sind. So sind beispielsweise Gasflaschen im Verkehr, die einen langgezogenen Hals mit einer darin angeordneten Ventileinrichtung zum Öffnen und selbsttätigen Schließen der Gasflasche aufweisen. Ein Steckteil mit weiterem, eigenen Ventil wäre hier unbrauchbar.

Deshalb soll nach einem Weiterbildungskonzept der vorliegenden Erfindung eine Möglichkeit geschaffen werden, um für Karbonisiervorrichtungen der eingangs beschriebenen Art, wenn diese an sich für Gasflaschen mit aufsetzbarem Ventil bestimmt sind, auch solche Gasflaschen verwendbar zu machen, die bereits ein integriertes Ventil tragen. Zu diesem Zweck soll eine Kupplungseinrichtung, die Bestandteil einer Schnellkupplung zum Anschluß der austauschbar in die Vorrichtung einsetzbaren Gasflasche ist, so ausgebildet sein, daß sie in einem Stutzenanschlußteil der Kupplung in sich formund kraftschlüssig sowie dichtend aufgenommen wird, und daß sie als den Hals der Gasflasche übergreifende, an diesem zu befestigende Buchse ausgebildet ist, die in ihrem Inneren einen freien Durchgang für einen Stößel des Gaszuführanschlusses zum Öffnen eines im Hals der Gasflasche angeordneten Gasaustrittventils aufweist derart, daß die Kupplungseinrichtung und der Flaschenhals eine dichtende Verbindung mit dem Gaszufuhranschluß ausbilden. Eine solche Kupplungseinrichtung, die nach einer besonderen Ausbildung ein Schraubinnengewinde zum Befestigen auf dem Hals der Gasflasche aufweisen kann, wenn diese Gasflasche mit Außengewinde, wie in vielen Fällen üblich, ausgestattet ist, bildet ein preiswert zur Verfügung zu stellendes Zusatzbauteil in Form eines Adapters, mit dessen Hilfe nicht nur unterschiedliche Flaschentypen an die zugehörige Karbonisiervorrichtung angeschlossen bzw. in sie aufgenommen werden können, sondern zugleich die Vorteile einer schnellkuppelnden Montage genutzt werden können.

In bevorzugter Weiterbildung dieses Gedankens kann die Kupplungseinrichtung mittels einer das Stutzenanschlußteil überlagernden Hülse festsetzbar sein, die in Steckrichtung der Kupplungseinrichtung gegen die Kraft einer zwischen dem Anschlußteil und der Hülse angeordneten Feder rückstellbar verschiebbar ist, wobei zwischen der Hülse und dem Anschlußteil mindestens ein Rastelement angeordnet ist, das bei gegen die Kraft der Feder versetzter Hülse aus einem Steckaufnahmeraum des Anschlußteils verdrängbar ist, um den Steckaufnahmeraum des Anschlußteils zum Einstecken der Kupplungseinrichtung freizugeben, und wobei das Rastteil in Rastverbindung mit einer an der Kupplungseinrichtung gebildeten Aufnahme gelangt und in der Rastposition durch die mittels der Feder zurückgesetzte Hülse arretierbar ist. So ist man in der Lage, Gasflaschen, die sonst in speziell dafür vorgesehene Karbonisiervorrichtungen eingeschraubt werden müssen, nämlich mit Hilfe des an ihrem Hals vorhandenen Außengewindes, mit Hilfe dieses Adapters in einfacher Weise für eine Karbonisiervorrichtung durch Einstecken nutzbar zu machen, also die Handhabung maßgeblich zu erleichtern. Dabei kann eine umlaufende Rinne zur Aufnahme, von unter Federdruck stehenden Kugeln vorgesehen sein.

Aus Gründen günstiger Herstellungskosten kann man die Kupplungseinrichtung als Spritzgußteil ausbilden. Sie kann weiter mit einem kragenförmigen, verjüngten Randbereich an der der Gasflasche abgekehrten Seite ausgebildet sein und in ihrem Inneren Dichtungsmittel für die Stirnfläche des Gasflaschenauslasses aufweisen. Damit ist eine absolut dichtende Anordnung auf der Gasflasche und eine entsprechende Verbindung zu dem Gaszufuhranschluß in einfach herstellbarer Weise möglich.

In weiterer Vereinfachung ist es letztlich aber auch denkbar und möglich, anstelle von Steckteil oder Adapter Flaschen von Haus aus mit einem in den Hals integrierten Ventil mit einer äußeren Halskontur zu versehen, die der des Adapters oder des Steckteils entspricht. Damit wird ein Zusatzteil überflüssig, also die Zahl der erforderlichen Teile weiter reduziert, und man kann durch einfaches Fräsen oder ähnliche Formgebung im Halsbereich herkömmliche Flaschen für einen problemlosen Einsatz in der erfindungsgemäßen Vorrichtung geeignet machen und bereitstellen.

Weitere Vorteile und Ausführungsformen oder -möglichkeiten der Erfindung gehen aus der folgenden Beschreibung der in der schematischen Zeichnung dargestellten Ausführungsbeispiele hervor. Es zeigt
- Fig. 1: eine teilweise geschnittene Ansicht einer eine erfindungsgemäße Kupplung und eine erfindungsgemäße Kupplungseinrichtung aufweisenden Karbonisiervorrichtung in Gesamtdarstellung, d.h. mit eingesetzter Flüssigkeitsflasche und Gasflasche;
- Fig. 2: ein Detail der Bodenausbildung einer Flüssigkeitsflasche nach Fig. 1 im Schnitt;
- Fig. 3: in Explosionsdarstellung zwei Elemente einer in Fig. 1 und 2 gezeigten Bodenventilanordnung;
- Fig. 4: die in Fig. 3 gezeigten Elemente in funktionsgerechter Ruhestellung im Zusammenhang mit der Ventilanordnung als Ganzes;
- Fig. 5: einen Detailausschnitt eines Gasflaschenkopfes mit Gasentnahmeanschluß im teilweisen Schnitt;
- Fig. 6: eine nicht gekuppelte Gasanschlußkupplung mit Betätigungseinrichtung im Schnitt;
- Fig. 7: eine teilweise geschnittene Ansicht einer modifizierten Vorrichtung zum Karbonisieren mit eingesetzter Flüssigkeits- und Gasflasche in Gesamtdarstellung und mit erfindungsgemäßem Kupplungsadapter am Kopfe der Gasflasche;
- Fig. 8: eine Einzeldarstellung von Adapter/Kupplungseinrichtung nach Fig. 7 zum Anschließen einer Gasflasche an eine Gaszufuhrleitung, und zwar in teilweisem Schnitt;
- Fig. 9: eine Schnittdarstellung des oberen Teils eines Halses einer Gasflasche mit montierter Kupplungseinrichtung nach Fig. 7 und 8;
- Fig. 10: eine teilweise geschnittene Ansicht einer weiteren modifizierten Vorrichtung zum Karbonisieren mit eingesetzten Flüssigkeitsund Gasflaschen in Gesamtdarstellung und mit Bedienungselement sowie Betätigungsteil in Ausbildung im oberen Bereich des Gerätegehäuses;
- Fig. 11: eine Einzeldarstellung des Bedienungselements - mit Entlüftungsanordnung - zum Anbringen auf einer Wasserflasche, und zwar in teilweisem Schnitt;
- Fig. 12: eine Ausschnittdarstellung des oberen Teils des Gerätegehäuses mit Bedienungselement und Anschluß an eine Gasflasche mit Sperr- oder Verriegelungseinrichtung in Seitenansicht; und
- Fig. 13: eine Draufsicht auf Fig. 12.

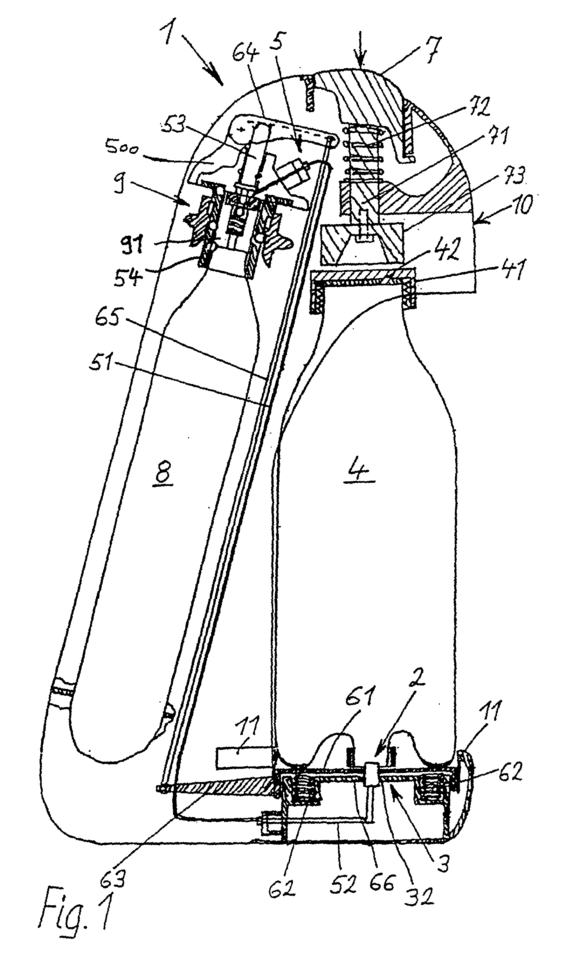

Die in Fig. 1 gezeigte Vorrichtung 1, die dem Karbonisieren von im wesentlichen gasfreien Flüssigkeiten zum Zwecke der Getränkezubereitung und -verfeinerung (Brauselimonade etc.) dient, umfaßt ein Gehäuse 10 zur Aufnahme einer Gasflasche 8 und eines Flüssigkeitsbehälters, ebenfalls in Form einer Flasche, hier mit 4 bezeichnet. Die Gasflasche 8 ist so angeordnet, daß ihre Hauptachse im spitzen Winkel zu der im wesentlichen aufrecht, d.h. vertikal stehenden Flüssigkeitsflasche liegt. Durch die aufrechte Anordnung der Flüssigkeitsflasche 4 wird ein Reservoir für die Gaszuführung, nämlich der Gasflasche 8 vorgesehen, kompakt in Nachbarschaft zu der Flüssigkeitsflasche in einer Neigung angeordnet werden, die ihrerseits eine höhere Sicherheit für den Fall von Undichtigkeiten im Austrittsbereich der Gasflasche 8 gewährleistet. Das Lager für den unteren Bereich der Gasflasche ist nur angedeutet und nicht mehr bezeichnet. Die Gasflasche ist in dem hinteren Teil des Gehäuses 10 angeordnet, während sich die Flüssigkeitsflasche 4 in einem vorderen Teil befindet, der eine breite, die leichte Handhabung, d.h. vor allem ein schnelles Einsetzen gewährleistende Öffnung oder Ausnehmung bietet. Mit anderen Worten kann gegenüber bekannten, im Markt befindlichen Geräten auf ein Verschließen des Gehäuses mittels einer Tür verzichtet werden, da der Benutzer keinen unmittelbaren Zugang zur Gasflasche zu haben braucht, sondern die Flüssigkeitsflasche leicht von vorne her einsetzen kann, wenn einmal eine Gasflasche eingesetzt und Gas für eine Vielzahl von Befüllungsvorgängen vorhanden ist. Im übrigen ist durch diese Zuordnung der beiden Behältnisse zueinander die Voraussetzung für eine besonders formschöne, also ästhetisch ansprechende Gesamtform nach Art eines teilkonischen Küchen- oder Haushaltsgerätes gegeben. So kann man, wenn man Fig. 1 sieht, an eine helmartige Anordnung mit einem offenen Visier denken.

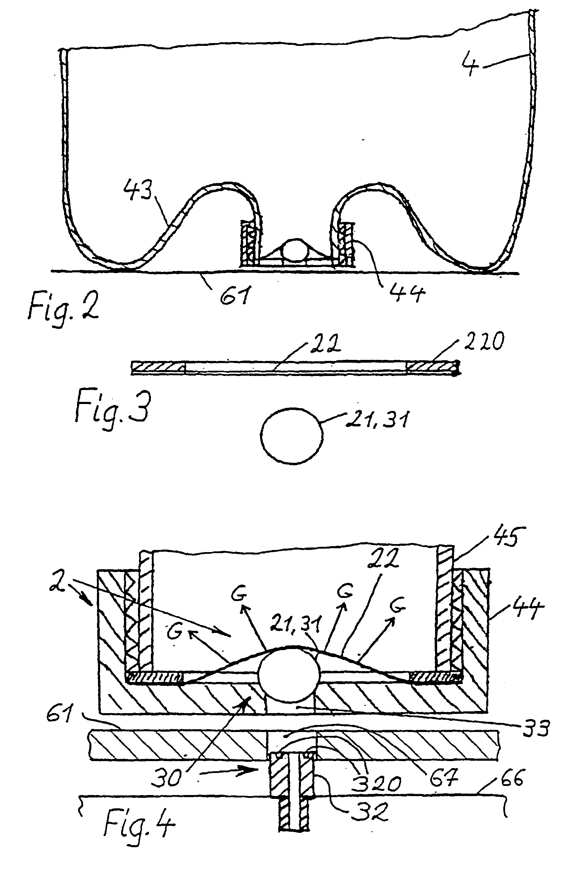

Um die in der Flasche 4 vorhandene Flüssigkeit mit einem unter Druck stehenden Gas, üblicherweise CO₂ vermengen bzw. vermischen zu können, ist die Flasche 4 in ihrem unteren Bereich mit einer Gaseinblaseinrichtung 3, die gleichzeitig einen Teil einer Dichteinrichtung 2 bildet, versehen. Letztere wiederum wird aufgebaut durch Kombination eines Kugelventils 31, 33 herkömmlichen Aufbaus, wobei die Kugel 31 mittels einer elastischen Platte 22 in ihren Sitz auf der Öffnung des Gasdurchlasses 33 gedrückt wird. Diese Platte 22 ist in Fig. 3 und 4 im Detail dargestellt und Teil eines Ringes 220, an dem sie z.B. durch Kleben, Vulkanisieren o.ä. befestigt ist. Auch eine einstückige Ausbildung ist möglich. Die Platte 22 ist membranähnlich gasdurchlässig, so daß in ihrer über das in Fig. 4 gezeigte Maß hinaus aufgewölbten Position, d.h. bei angehobener Kugel 31, Gas durch sie hindurchtreten kann. Dieses erfolgt in Richtung der Pfeile G in aufgefächerter Weise, was maßgeblich zu einer guten Verteilung des Gases in der Flüssigkeit beiträgt. Die Dichteinrichtung 2 ist als Ganzes in ein Schraubgewinde eines Stutzens 45 im Flaschenboden einsetzbar, wobei eine Verschlußkappe 44, die den Gasdurchlaß 33 trägt, die Kugel 31 in ihrer Lage gegen die elastische Platte 22 hält. Der Stutzen 45 sitzt in einem Flaschenrezeß. Er ist bei stehender Flasche 4 verdeckt und bildet damit kein Hindernis.

Einzelheiten der Dicht- und der Gaseinblaseinrichtungen 2, 3 werden im folgenden ebenso näher beschrieben wie die der Aufnahme der Flasche 4 dienende Bewegungseinrichtung, die im Gehäuse 10 gelagert und in Verbindung mit letzterem so ausgebildet ist, daß sie die Flasche 4 in einer einfachen, zentrierenden Weise trägt.

Dieser Lageranordnung für den Flaschenboden 10 im Gehäuse gegenüber ist eine Auslöseeinrichtung vorgesehen, um eine eingesetzte Flasche 4 begasen zu können. Diese Vorrichtung umfaßt ein Bedienungselement 7 sowie eine Feder-Kolben-Anordnung 72, 71 mit einem Stempel 73, der auf einen Hals-Schraubverschluß 41 der Flasche, der zugleich eine feine Kalibrieröffnung 42 zum Überdruckausgleich umfaßt, unter dem erforderlichen Haltedruck aufsetzt. Ein Eindrücken des Bedienungselementes 7 führt folglich dazu, daß die Flasche 4 fest gegen ihre Auflage am Flaschenboden gedrückt wird, wobei die dadurch ausgelöste Funktion im folgenden noch näher erläutert wird. Um kleinere Flaschen als die gezeigte einsetzen zu können, kann man den Stempel 73 leicht durch ein Distanzstück verändern, d.h. verlängern.

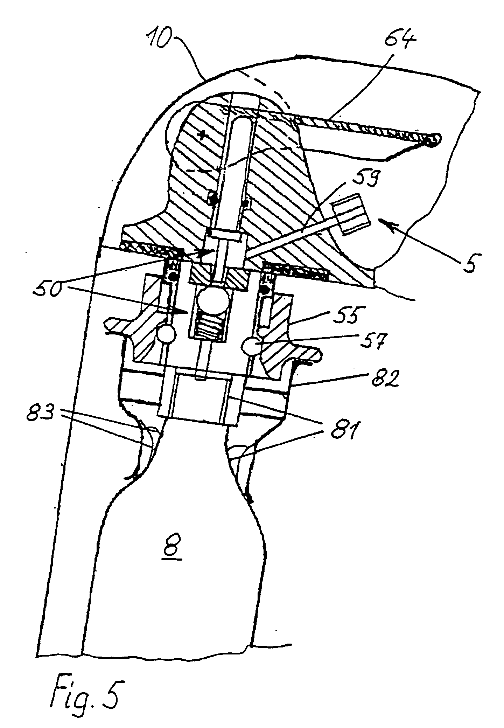

Am oberen Ende der Gasflasche 8 befindet sich ein Gaszufuhranschluß 5, der mit dem Flaschenhals mittels einer erfindungsgemäßen Schnellkupplung 9 unter Einführen des Flaschenhalses 81 mit der Flasche 8 verbunden werden kann (Fig.5). Der Gaszufuhranschluß 5 ist dabei fest am Gehäuse 10 vorgesehen. Von ihm erstreckt sich eine Leitung in Form eines Gasschlauches 51, Kupferrohres oder einer ähnlichen geeigneten Leitung nach unten in den Bereich des Bodenlagers für die Flasche 4, wobei hier eine feste Verbindung zu einem Gaskanal 52, der zu der vorerwähnten Gaseinblaseinrichtung 3 führt, vorgesehen ist. Dieser Gaskanal 52 endet in einem zweiten Ventilteil 32, das als Steckbuchse mit einem Gasdurchgang versehen ist, wie man dies in Fig. 4 erkennt. An der Stirnseite dieses zweiten Ventilteils 32 befinden sich radiale Austrittsschlitze 320. Bei Herabdrücken der Flasche 4 und damit Absenken der Hubplatte 61 gegen die Kraft von Federn 62 setzt die Kugel 31 auf der Oberseite der Buchse 32 auf und wird hochgedrückt. Dadurch wird der Gasdurchlaß 33 geöffnet, und das von der Gasflasche 8 über den Schlauch 51 und den Gaskanal 52 strömende Gas kann durch die Radialschlitze 320 in den Raum unterhalb der nunmehr gegenüber der Position in Fig. 4 stärker gespannten membranartigen Platte 22 gelangen. Diese kann das Gas aufgrund der oben erwähnten Gasdurchlässigkeit und Wölbung in der dargestellten fächerartigen Form durchtreten, um sich in der Flüssigkeit in der Flasche 4 zu verteilen. Um die Gasaustrittsbuchse 32 in der beschriebenen Weise mit der Kugel 31 in Wirkverbindung treten zu lassen, ist in der Hubplatte 61 ein entsprechender Durchgang 67 vorgesehen; diese Durchgangsöffnung kann gleichzeitig der Führung der Hubplatte an der Außenseite der Buchse 32 dienen.

Es sei auch noch darauf hingewiesen, daß natürlich die Flasche 4 in geeigneter Weise in dem Bodenbereich der Vorrichtung 1 bzw. des Gehäuses 10 geführt ist, wobei zu diesem Zwecke lediglich eine Aufnahme 11 (Fig. 1) angedeutet ist.

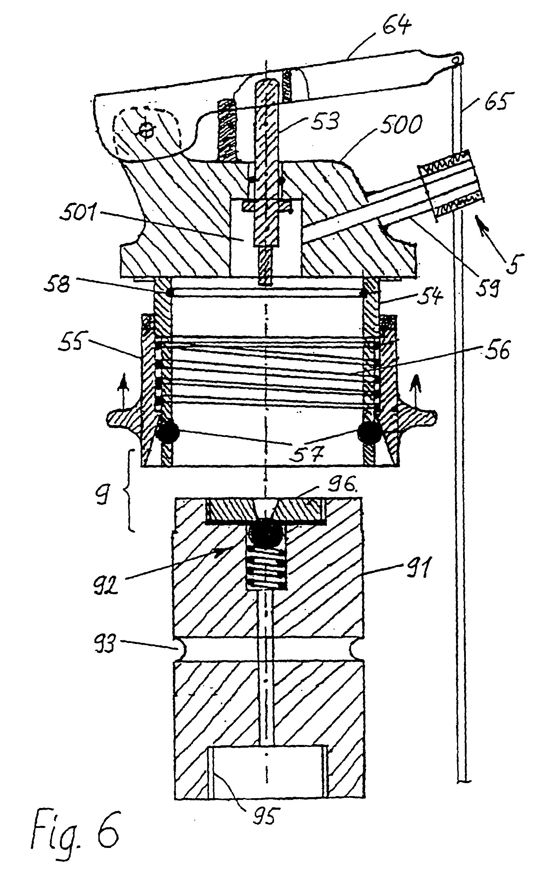

Zur Verbindung des Gasschlauches 51 mit der gemäß Fig. 1 eingesetzten Gasflasche in deren oberem Bereich ist ein am Gehäuse 10 fester Anschlußkopf 500 vorgesehen, wie dies in Fig. 1 und im größeren Detail in Fig. 6 erkennbar ist. Der Anschlußkopf 500 trägt einen seitlich schräg vorspringenden Schlauchanschlußstutzen 59, an dem der Schlauch mit einer nicht näher bezeichneten Überwurfmutter befestigt werden kann. Durch die gezeigte Schräganordnung dieses Stutzens 59 wird der Vorteil erzielt, daß bei Undichtigkeit im Gasflaschenhalsbereich Gas nur seitlich entweichen und keine besondere destruktive Energie entfalten kann.

Der Kopf 500 trägt, in geeigneter Weise daran befestigt, einen Stutzen 54, der in seinem Inneren einen Dichtring 58 und im unteren Bereich als Rastelemente dienende, in entsprechenden Ausnehmungen sitzende Kugeln 57 aufweist, während auf der Außenseite des Stutzens 54, gegen die Kraft einer Schraubenfeder 56 verschiebbar, eine Überwurfhülse 55 vorgesehen ist. In den Stutzen 54 paßt ein Steckkörper 91, der bei gegen die Kraft der Feder 56 hochgeschobener Überwurfhülse 55 in den Stutzen 54 einführbar ist. Dabei können aufgrund der Konizität des unteren Teils der Überwurfhülse 55 die Kugeln nach außen ausweichen. Der Steckkörper 91 wird, bis eine an ihm vorgesehene Ringnut 93 in den Bereich der Kugeln 57 und seine Oberkante gegen die Unterkante des Kopfes 500 gelangt sind, eingeschoben. Sodann läßt man die Überwurfhülse 55 unter der Kraft der Feder 56 zurückschnellen, wodurch die Kugeln 57 in die Nut 93 eingreifen und den Steckkörper 91 arretieren.

Der Steckkörper 91 ist, bevor er in den Stutzen 54 eingesteckt wird, auf den Hals der Gasflasche 8 mittels eines in seinem unteren Bereich angeordneten Innengewindes 95 aufgeschraubt. Er trägt in seinem Inneren ein Ventil 92 üblicher Anordnung für einen Kanal 94, durch den Gas aus der Flasche abzuziehen ist. Im oberen Bereich des Steckkörpers 91 befindet sich ein Einsatz 96 mit einer konischen, nicht näher bezeichneten Gasöffnung, die in Ruhestellung von der Ventilkugel unter Kraft der angedeuteten Feder verschlossen ist.

Um bei eingesetztem Steckkörper 91 das Ventil 92 öffnen zu können, befindet sich im Anschlußkopf 500 ein Stößel 53, der in vertikaler Richtung bewegbar ist und mit seinem unteren, verjüngten Teil durch den konischen Gasaustritt im Einsatz 96 auf die Kugel einwirken kann.

Der Stößel 53 ist mittels eines einseitig schwenkbar gelagerten ersten Hebelarms 64 bewegbar. Eine nicht näher bezeichnete Wegbegrenzung zwischen Lager und Stößel sorgt dafür, daß exakt die erforderlichen Bewegungswege für den Stößel 53 eingehalten werden können.

An das freie Ende des ersten Hebelarms 64 ist, wie in Fig. 1 erkennbar, eine Zugstange 65 angelenkt. Diese ist an ihrem unteren Ende an einen zweiten Hebelarm 63 angelenkt, der seinerseits an der Bewegungseinrichtung, nämlich an der Hubplatte 61 befestigt ist. Wird diese Hubplatte 61 durch Herabdrücken der Flasche 4 mittels des Bedienungselementes 7 abgesenkt, so wird die Zugstange 65 über den zweiten Hebelarm 63 nach unten gezogen. Der erste Hebelarm 64 bewegt sich um seinen Lagerpunkt im Uhrzeigersinn. Dadurch drückt er auf den Stößel 53, der seinerseits die Kugel des Ventils 92 nach unten verdrängt. Nunmehr kann das Gas durch den Kanal 94, den Einsatz 96, einen im unteren Bereich des Kopfes 500 gebildeten Gasverteilraum 501 und den Schlauchanschluß 59 in den Gasschlauch 51 gelangen. Da zugleich die Flasche 4 abgesenkt ist, ist auch, wie man bei Heranziehen der Fig. 4 feststellen kann, durch Anheben der Kugel 31 der Eintritt des Gases durch den Kanal der Buchse 32 in den Wölbungsraum unterhalb der elastischen Platte 22 und folglich in die Flüssigkeit in der Flasche 4 freigegeben bzw. gewährleistet.

Um das Einsetzen der Gasflasche 8 mittels der erfindungsgemäßen Kupplung 9 zu erleichtem, ist auf das obere Ende der Gasflasche 8 eine Montagehülse 82 aus geeignetem Plastikmaterial aufgesetzt (s. Fig. 5). Diese dient auch als Schutzkappe für den auf den Flaschenhals aufgeschraubten Steckkörper 91, so daß zum Beispiel bei Umfallen dieser nicht beschädigt werden kann. Man erkennt, daß bei Heranführen des Oberteils der Gasflasche 8 mit dieser zentrierend wirkenden Montagehilfe deren Oberrand gegen einen ringförmigen Ansatz oder Flansch an der Überwurfhülse 55 drückt und somit die Funktion des Hochdrückens der Hülse 55 zwecks Einführens des Steckkörpers 91 in den Stutzen 54 übernimmt. Eine solche Montagehilfe ist ein preiswert herstellbares Teil. Es kann mit Sollbruchstellen 83 vorgefertigt werden, um spätestens dann, wenn die Rastoder Arretierungsposition des Steckkörpers 91 gegenüber dem Stutzen 54 erreicht ist, zerstört zu werden.

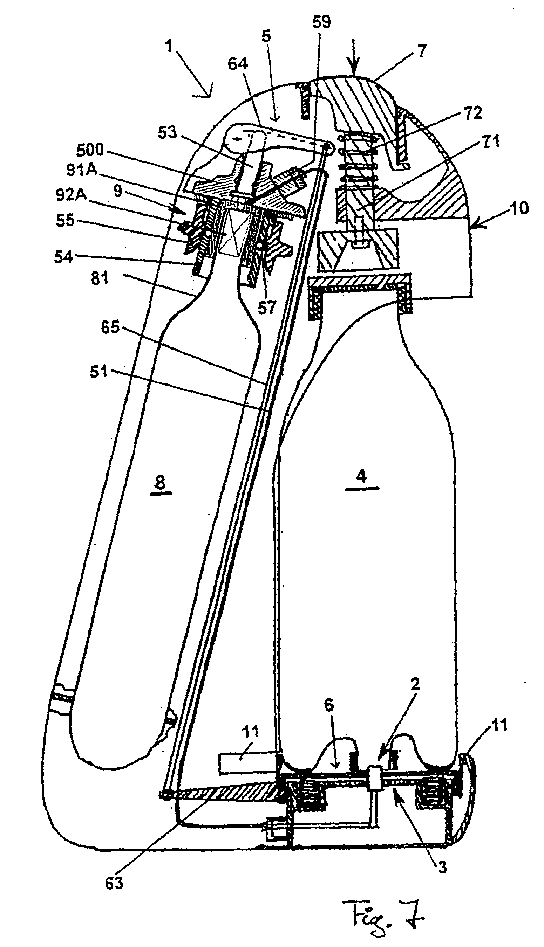

In der in Fig. 7 gezeigten modifizierten Karbonisiervorrichtung sind gleiche Teile wie in der in Fig. 1 gezeigten Ausführungsform mit gleichen Bezugszeichen versehen. Es werden also nachfolgend nur abweichende Elemente und Funktion erläutert.

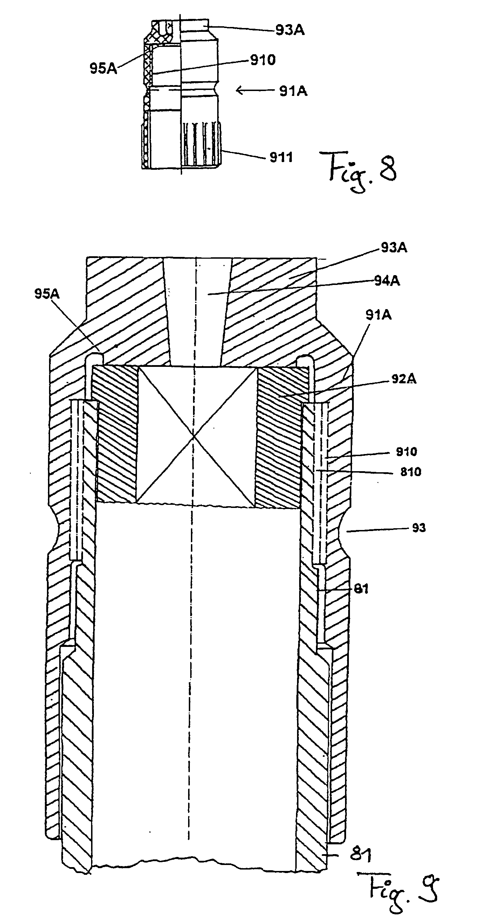

Im Gegensatz zum Beispiel der Fig. 1 ist in Fig. 7 eine in das Stutzenanschlußteil 54 - im folgenden auch kurz Stutzen - passende erfindungsgemäße Kupplungseinrichtung 91A vorgesehen, die, wie in Fig. 8 und 9 gezeigt, ein Innengewinde 910 aufweist und mit dessen Hilfe auf ein Außengewinde 810 des Flaschenhalses 81 A aufgeschraubt ist. In dem Flaschenhals 81 A befindet sich ein herkömmliches, daher hier nicht näher darzustellendes und zu beschreibendes Gasauslaßventil 92A, dessen Funktion weiter unten beschrieben wird. Die Kupplungseinrichtung 91A ist bei gegen die Kraft einer Schraubenfeder 56 hochgeschobener Überwurfhülse 55 in den Stutzen 54 einführbar. Dabei können aufgrund der Konizität des unteren Teils der Überwurfhülse 55 die Kugeln nach außen ausweichen. Die Kupplungseinrichtung 91A wird, bis eine an ihr vorgesehene Ringnut 93 in den Bereich der Kugeln 57 und ihre Oberkante gegen die Unterkante des Kopfes 500 gelangt sind, eingeschoben. Sodann läßt man die Überwurfhülse 55 unter der Kraft der erwähnten Feder 56 zurückschnellen, wodurch die Kugeln 57 in die Nut 93 eingreifen und die Kupplungseinrichtung 91A arretieren.

Die Kupplungseinrichtung 91A ist, bevor sie in den Stutzen 54 eingesteckt wird und wie bereits oben erläutert wurde, auf den Hals 81A der Gasflasche 8 mittels des in ihrem oberen Bereich angeordneten Innengewindes 910 aufgeschraubt und trägt in ihrem Inneren, d.h. ihrem oberen Bereich einen Kanal 94A, durch den Gas nach Durchtreten des Ventils 92A aus der Gasflasche 8 abzuziehen ist. Die Kupplungseinrichtung 91A ist zwecks Erleichterung des Aufschraubens auf dem Flaschenhals 81A beispielsweise mit einer Rändelung 911 ausgestattet und kann in ihrem Inneren mit geeigneten Mitteln zur sicheren Abdichtung gegen das Flaschengas ausgerüstet sein.

Um bei eingesetzter Kupplungseinrichtung 91A das Ventil 92A öffnen zu können, befindet sich im Anschlußkopf 500 ein wie bei Fig. 1 beschriebener Stößel 53, der in Richtung der Gasflaschenhauptachse bewegbar ist und mit seinem unteren, verjüngten Teil durch den erwähnten, als konischer Gasaustritt geformten Kanal 94A in der Kupplungseinrichtung 91A auf das Ventil 92A einwirken kann.

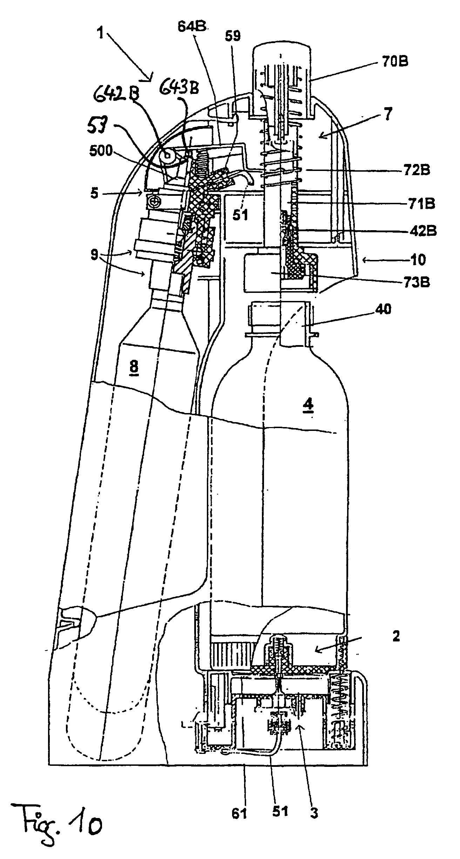

Die in Fig. 10 gezeigte Gesamtdarstellung spiegelt eine andere modifizierte Karbonisiervorrichtung wider, bei der ebenfalls gleiche Teile wie sie im Zusammenhang mit Fig. 1 beschrieben sind, gleiche Bezugszeichen aufweisen und hier nicht erneut erläutert zu werden brauchen.

Diese Vorrichtung umfaßt ein Bedienungselement 7 sowie eine Feder-Kolben-Anordnung 72B, 71 B, die auf den Hals 40 der Flasche 4 dichtend aufschraubbar ist. Die Anordnung versteht sich aus der Zeichnung praktisch von selbst. Mit anderen Worten führt ein Eindrücken des Bedienungselementes 7 dazu, daß die Flasche 4 fest mit dem Flaschenboden gegen ihre Auflage auf der Lagerfläche 61 gedrückt wird.

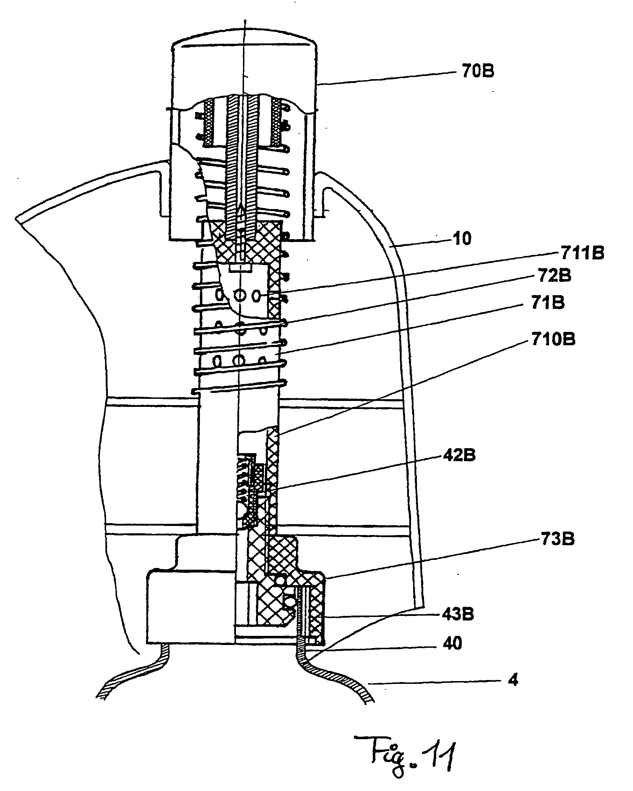

Wie aus Fig. 10 erkennbar, ist das Bedienungselement 7 nach Art eines in dem Gehäuse 10 geführten Stößels ausgebildet. An einem in der Kappe gelagerten Zapfen ist ein Kolbenelement in Form eines Rohrteils 71B befestigt. Zwischen Kappe 70B und Kolbenelement 71B ist eine Feder 72B angeordnet, gegen deren Kraft die Kappe eingedrückt werden kann, um das Kolbenelement nach unten zu drücken. Am unteren Ende des Kolbenelements befindet sich ein Stempelelement 73B, das als Schraubteil ausgebildet ist, um mit Hilfe eines in ihm angeordneten Innengewindes 43B mit dem Hals 40 der Flasche 4 verschraubt zu werden. Diese Konstruktion ist in größerem Detail in Fig. 11 erkennbar. Hieraus geht vor allem auch hervor, daß sich im Inneren des unteren Bereiches des Rohrteils 71B ein Flaschenentlüftungsventil 42B befindet. Dieses ist in herkömmlicher Weise als unter Kraft einer Feder arbeitendes Kugel-Rückschlagventil ausgebildet. Bei der gezeigten aufgeschraubten Position des Bedienungselements 7 kann, wenn sich im Inneren der Flasche 4 ein zu hoher Druck aufbaut, dieser durch das Entlüftungsventil 42B nach oben entweichen, wobei ein Austritt über in der Wandung des Rohrteils 71B angeordnete Entlüftungslöcher erfolgen kann.

Das Bedienungselement 7 ist einerseits drehbar, um das Aufschrauben auf den Hals 40 der Flasche 4 zu gewährleisten, und andererseits längsverschiebbar, um die Arbeitsfunktion der Vorrichtung auszulösen.

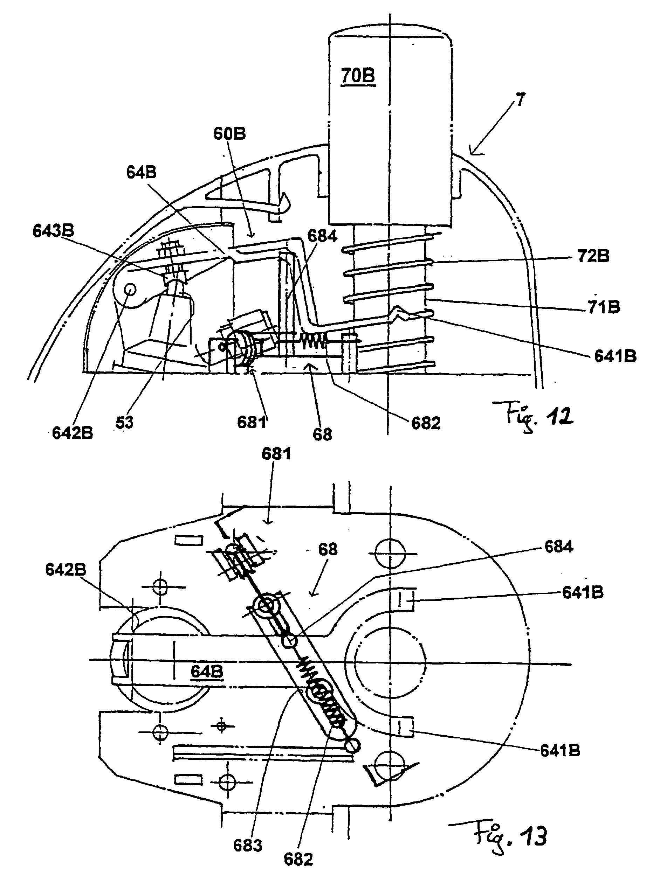

Zwischen dem Bedienungselement 7 und dem Gaszufuhranschluß 5 sind Gestängemittel in Form eines Schwenkhebels 64B vorgesehen (Fig. 11 und 12). Dieser Schwenkhebel 64B ist in der Nachbarschaft des oberen Teils der Gasflasche 8 in einem Schwenklagerende 642B gelagert. An dem Schwenkhebel 64B befindet sich ein Arbeitsstempel 643B, der durch Angreifen an einem Öffnungsstößel 53 auf das im oberen Teil der Gasflasche 8 angeordnete, aus Fig. 10 erkennbare Gasflaschenventil einwirken kann, wenn der Schwenkhebel 64B im Uhrzeigersinn bewegt wird. Nach einer geeigneten Kröpfung setzt sich der Schwenkhebel 64B in ein dem Schwenklagerende 642B gegenüberliegendes Gabellagerende 641B fort, das das Rohrteil 71B des Bedienungselements 7 umgreift und mit seinen Gabelenden im Bereich der Kappe liegt derart, daß die eingedrückte Kappe auf die hier erkennbaren Erhebungen drückt und damit den Schwenkhebel 64B im Uhrzeigersinn schwenken kann.

Um ein frühzeitiges Öffnen der Gaszufuhr durch Eindrücken des Stößels 53 zu verhindern, sind im Bereich und unterhalb des Schwenkhebels 64B, also der das Bedienungselement 7 direkt mit dem Gaszufuhranschluß 5 verbindenden Gestängemittel 60B Sperrmittel 68 angeordnet. Diese gewährleisten, daß erst nach genügender Eindrückbewegung der Kappe 70B und damit des Rohrteils 71B ein Öffnen des Gaszufuhranschlusses 5 möglich wird, indem nämlich, und zwar nur bei eingesetzter Flüssigkeitsflasche 4, ein genügender Flaschenweg nach unten zurückgelegt wird, um die Gaseinblaseinrichtung 3 mit ihrer Dichteinrichtung 2 zu öffnen. Um dann die Sperrmittel 68 entriegeln zu können, ist eine Zugeinrichtung 681 in Form eines Seilzuges angeordnet, dessen Seil im unteren Teil mit dem abwärtsbewegbaren Lagerboden 61 B für die Flasche 4 verbunden ist, so daß gegen die Kraft einer Feder 682 (Fig. 12) ein Träger 683 für einen Riegelstift 684 in eine Position gezogen wird, in der dieser Stift 684 unter dem Schwenkhebel 64B hervortritt und dessen Absenken im Uhrzeigersinn freigibt, um den Stößel 53 nach unten zu drücken und den Gasfluß freizusetzen.

Es versteht sich von selbst, daß beim Schließen der Vorrichtung die Hand der Bedienungsperson die Kappe 70B freigibt und diese durch die Kraft der Feder 72B nach oben gedrückt wird, so daß das Gabelende 641 B des Schwenkhebels 64B von der Kappe 70B entlastet wird. Die Feder 682 zieht dann den Stift 684 mit Hilfe des Trägers 683 wieder unter den Hebel 64B, der durch den Druck des Stößels 53 und durch die in Fig. 10 nur angedeutete Schraubenfeder entgegen dem Uhrzeigersinn zurückbewegt wird.

Statt des hier gezeigten translatorischen Trägers 683 ist es natürlich auch möglich, eine drehbare Trägerscheibe zu verwenden, an der tangential der Seilzug angreift. Dieser dreht einen Nocken, der sich in Verriegelungsposition am Schwenkhebel 64B befindet, aus diesem Bereich heraus.

Es versteht sich von selbst, daß alle Teile den Hygieneanforderungen entsprechend konstruiert, strukturiert und angeordnet werden, so daß sie auch, sofern erforderlich, einen leichten Austausch ermöglichen, während irgendwelche Hinterschneidungen, die normalerweise Schmutzfänger sind, vermieden werden sollen. Natürlich wird auch ein hinreichender Zugang zu Reinigungszwecken gewährleistet, wie man dies z.B. bezüglich der leicht demontierbaren Anordnung der Gaseinblas-/Dichteinrichtung erkennt.

## Patentansprüche

1. Kupplung zum Anschließen einer Gasflasche (8) an eine Gaszufuhrleitung (51) in einer Vorrichtung (1) zum Karbonisieren von in einer mit einer verschließbaren, im Halsbereich (40) angeordneten Ausgießöffnung sowie einer Gaseintrittsöffnung (33) versehenen verschlossenen Flasche (4) enthaltener Flüssigkeit, wobei die Vorrichtung (1) ausgestattet ist mit
- einer dichtend mit der Flüssigkeits-Flasche (4) verbindbaren Gaseinblaseinrichtung (3) zum Einblasen von Gas in die Flüssigkeit,
- einer Einrichtung zum Halten der Flüssigkeits-Flasche (4) in einer vorbestimmten Stellung, in der die Gaseinblaseinrichtung (3) mit der Flüssigkeits-Flasche (4) funktionell verbunden ist,
- einem die Flüssigkeits-Flasche (4) mindestens teilweise umgebenden Gehäuse (10) zur Aufnahme mindestens der Flüssigkeits-Flasche (4) in besagter Stellung,
- einem von außen zugänglichen Bedienungselement (7) zum Öffnen der Gaseinblaseinrichtung (3) sowie zum Öffnen eines Gas aus der angeschlossenen Gasflasche (8) auslassenden Gasauslaßventils (92, 92A) und
- einem an dem Gehäuse (10) sitzenden, mit einer Gasflasche (8) verbindbaren Gaszufuhranschluß (5) für in die Flüssigkeits-Flasche (4) einzublasendes Gas, wobei der Gaszufuhranschluß (5) ein Anschlußteil (54) der Kupplung aufweist, das die Gasflasche (8) in der Kupplungsverbindung hält, wobei der Gasweg in der Kupplung nach dem Herstellen der Kupplungsverbindung durch Öffnen des Gasauslaßventils (92, 92A) mittels des Bedienungselements (7) geöffnet wird,
**dadurch gekennzeichnet, daß**
die Kupplung durch eine Bestandteile des Gaszuführanschlusses (5) aufweisende Schnellkupplung (9) zum Anschluß einer austauschbar in die Vorrichtung (1) einsetzbaren Gasflasche (8) gebildet ist, umfassend eine ein Steckteil (91, 91A) bildende Kupplungseinrichtung und als Anschlußteil ein Stutzenanschlußteil (54), das das Steckteil (91, 91A) in sich form- und kraftschlüsig sowie dichtend aufnimmt, wobei das Steckteil ein die Gasflasche (8) haltendes Teil bildet.

2. Kupplung nach Anspruch 1, **dadurch gekennzeichnet, daß** das Stutzenanschlußteil (54) Rastelemente (57) aufweist, die in eine Rastnut (93) des Steckteils (91, 91A) eingreifen.

3. Kupplung nach Anspruch 1 oder 2, **dadurch gekennzeichnet, daß** die Kupplung (9) ein zwischen dem Stutzenanschlußteil (54), ein in dieses einrastbares Steckteil (91, 91A) sowie ein zwischen den beiden Teilen gebildetes, in der Steckverbindung zu öffnendes Ventil (50; 53, 92) umfaßt, wobei das Steckteil (91, 91A) mit dem Auslaß der Gasflasche (8) verbunden ist.

4. Kupplung nach einem der Ansprüche 1 bis 3, **dadurch gekennzeichnet, daß** die Kupplungseinrichtung (91A) als den Hals (81) der Gasflasche (8) übergreifende, an diesem zu befestigende Buchse ausgebildet ist und in ihrem Inneren einen freien Durchgang für einen Stößel (53) des Gaszufuhranschlusses (5) zum Öffnen eines im Hals (81) der Gasflasche (8) angeordneten Gasaustrittventils (92A) aufweist derart, daß die Kupplungseinrichtung (91 A) und der Flaschenhals (81) eine dichtende Verbindung mit dem Gaszufuhranschluß (5) ausbilden.

5. Kupplung nach Anspruch 4, **dadurch gekennzeichnet, daß** die Kupplungseinrichtung (91A) ein Schraubinnengewinde (910) zum Befestigen auf dem Hals (81) der Gasflasche (8) aufweist.

6. Kupplung nach einem der Ansprüche 1 bis 5, **dadurch gekennzeichnet, daß** die Kupplungseinrichtung (91, 91A) mittels einer das Stutzenanschlußteil (54) überlagernden Hülse (55) festsetzbar ist, die in Steckrichtung der Kupplungseinrichtung (91, 91A) gegen die Kraft einer zwischen dem Anschlußteil (54) und der Hülse (55) angeordneten Feder rückstellbar verschiebbar ist, wobei zwischen der Hülse (55) und dem Anschlußteil (54) mindestens ein Rastelement (57) angeordnet ist, das bei gegen die Kraft der Feder versetzter Hülse (55) aus einem Steckaufnahmeraum des Anschlußteils (54) verdrängbar ist, um den Steckaufnahmeraum des Anschlußteils (54) zum Einstecken der Kupplungseinrichtung (91, 91A) freizugeben, und wobei das Rastteil (57) in Rastverbindung mit einer an der Kupplungseinrichtung (91, 91A) gebildeten Aufnahme (93) gelangt und in der Rastposition durch die mittels der Feder zurückgesetzte Hülse (55) arretierbar ist.

7. Kupplung nach einem der Ansprüche 1 bis 6, **dadurch gekennzeichnet, daß** die Kupplungseinrichtung (91, 91A) als Spritzgußteil ausgebildet ist.

8. Kupplung nach einem der Ansprüche 1 bis 7, **dadurch gekennzeichnet, daß** die Kupplungseinrichtung (91A) mit einem kragenförmigen, verjüngten Randbereich (93A) an der der Gasflasche (8) abgekehrten Seite ausgebildet ist und in ihrem Inneren Dichtungsmittel (95A) für die Stirnfläche des Gasflaschenauslasses aufweist.

9. Kupplung nach einem der Ansprüche 1 bis 8, **dadurch gekennzeichnet, daß** die Kupplungseinrichtung (91, 91A) eine ihr zugeordnete Montagehilfe (82) in Form einer über den Flaschenhals (81) steckbaren Hülse mit Sollbruchstellen (83) zu ihrer Zerstörung bei Erreichen der Rastposition der Kupplung (9) umfaßt.

10. Kupplung nach Anspruch 9, **dadurch gekennzeichnet, daß** die Montagehilfe (82) den Oberrand des gasflaschenseitigen Ventilteils (91) abdeckt.

11. Kupplungseinrichtung einer Kupplung (9) gemäß einem der Ansprüche 1 bis 10, **dadurch gekennzeichnet, daß** die Kupplungseinrichtung (91A) als den Hals (81A) der Gasflasche (8) übergreifende, an diesem zu befestigende Buchse ausgebildet ist und in ihrem Inneren einen freien Durchgang für einen Stößel (53) des Gaszufuhranschlusses (5) zum Öffnen eines im Hals (81 A) der Gasflasche (8) angeordneten Gasaustrittventils (92A) aufweist derart, daß die Buchse (91A) und der Flaschenhals (81A) eine dichtende Verbindung mit dem Gaszufuhranschluß (5) ausbilden.

12. Kupplungseinrichtung nach Anspruch 11, **dadurch gekennzeichnet, daß** sie ein Schraubinnengewinde (910) zum Befestigen auf dem Hals (81A) der Gasflasche (8) aufweist.

13. Kupplungseinrichtung einer Kupplung (9) gemäß einem der Ansprüche 1 bis 10, **dadurch gekennzeichnet, daß** die Kupplungseinrichtung (91) als mit dem Hals (81) der Gasflasche (8) verbindbarer Steckkörper (91) ausgebildet ist, der in seinem Inneren ein Ventil (92) trägt, das bei in das Stutzenanschlußteil (54) des Gaszuführanschlusses (5) eingesetztem Steckkörper (91) geöffnet wird, wobei der Steckkörper (91) und der Flaschenhals (81) eine dichtende Verbindung mit dem Gaszufuhranschluß (5) ausbilden.

14. Kupplungseinrichtung einer Kupplung gemäß einem der Ansprüche 1 bis 10, **dadurch gekennzeichnet, daß** die Kupplungseinrichtung durch einen ein Steckteil bildenden Hals einer Gasflasche gebildet ist, wobei in den Hals ein Ventil integriert ist und der Hals mit einer äußeren Halskontur versehen ist, die der eines Adapters oder eines Steckteils entspricht.

15. Gasflasche (8) zum Anschluß an eine Karbonisiervorrichtung mittels einer Kuppung (9), die eine Kupplungseinrichtung gemäß Anspruch 14 aufweist, **dadurch gekennzeichnet, daß** das Hals-Steckteil der Gasflasche eine Nut (91, 91 A) zum Herstellen einer formschlüssigen Arretierverbindung zwischen Hals-Steckteil und Stutzenanschlußteil (54) aufweist.

## Claims

1. Coupling for attaching a gas bottle (8) to a gas feed line (51) in a device (1) for carbonising a liquid contained in a sealed bottle (4) provided with a sealable spout opening arranged in the neck region (40) and a gas admission opening (33), wherein the device (1) is equipped with:
- a gas injection device (3) connectable in sealing manner to the liquid bottle (4) for injecting gas into the liquid;
- a device for holding the liquid bottle (4) in a predetermined position in which the gas injection device (3) is functionally connected to the liquid bottle (4);
- a housing (10) surrounding the liquid bottle (4) at least in part for accommodating at least the liquid bottle (4) in said position;
- an operating element (7) accessible from the outside for opening the gas injection device (3) and for opening a gas discharge valve (92, 92A) releasing gas from the attached gas bottle (8); and
- a gas feed connector (5) seated on the housing (10) and connectable to a gas bottle (8) for the gas to be injected into the liquid bottle (4), wherein the gas feed connector (5) possesses a connecting part (54) of the coupling which holds the gas bottle (8) in the coupling connection, wherein the gas pathway in the coupling after establishment of the coupling connection is opened by opening the gas discharge valve (92, 92A) by means of the operating element (7),
**characterised in that**
the coupling is formed by a rapid-action coupling (9) possessing components of the gas feed connector (5) for connecting a gas bottle (8) insertable in exchangeable manner into the device (1) comprising a coupling device forming a plug-in part (91, 91A) and as connecting part a nozzle connecting part (54) which accommodates the plug-in part (91, 91A) in itself in form- and friction-fitting manner and in sealing manner, wherein the plug-in part forms a part holding the gas bottle (8).

2. Coupling according to claim 1, **characterised in that** the nozzle connecting part (54) possesses locking elements (57) which engage in a locking groove (93) of the plug-in part (91, 91A).

3. Coupling according to claim 1 or 2, **characterised in that** the coupling (9) comprises between the nozzle connecting part (54) a plug-in part (91, 91A) capable of snapping into the latter and a valve (50; 53, 92) formed between the two parts and to be opened in the plug-in connection, wherein the plug-in part (91, 91A) is connected to the outlet of the gas bottle (8).

4. Coupling according to one of claims 1 to 3, **characterised in that** the coupling device (91A) is constructed in the form of a sleeve engaging over the neck (81) of the gas bottle (8) and to be fastened to the latter and in its interior has a free passage for a plunger (53) of the gas feed connector (5) for opening a gas discharge valve (92A) arranged in the neck (81) of the gas bottle (8) in such a way that the coupling device (91A) and the neck (81) of the bottle form a sealing connection with the gas feed connector (5).

5. Coupling according to claim 4, **characterised in that** the coupling device (91A) possesses an inner screw thread (910) for fastening onto the neck (81) of the gas bottle (8).

6. Coupling according to one of claims 1 to 5, **characterised in that** the coupling device (91, 991A) is fixable by means of a jacket (55) fitting over the nozzle connecting part (54) which jacket is restorably displaceable in the plug-in direction of the coupling device (91, 91A) against the force of a spring arranged between the connecting part (54) and the jacket (55), wherein arranged between the jacket (55) and the connecting part (54) is at least one locking element (57) which when the jacket (55) is displaced against the force of the spring is dislodgeable from a plug-in receiving space of the connecting part (54) in order to release the plug-in receiving space of the connecting part (54) for plugging in the coupling device (91, 91A) and wherein the locking part (57) comes into locking engagement with a receptacle (93) formed on the coupling device (91, 91A) and is arrestable in the locked position by the jacket (55) set back in position by means of the spring.

7. Coupling according to one of claims 1 to 6, **characterised in that** the coupling device (91, 91A) is constructed as an injection-moulded part.

8. Coupling according to one of claims 1 to 7, **characterised in that** the coupling device (91A) is constructed with a collar-shaped, tapering peripheral region (93A) on the side facing away from the gas bottle (8) and in its interior has sealing means (95A) for the end face of the gas bottle outlet.

9. Coupling according to one of claims 1 to 8, **characterised in that** the coupling device (91, 91A) comprises a fitting aid (82) associated with it in the form of a jacket which is pluggable over the neck (81) of the bottle and has predetermined breaking points (83) to destroy it on reaching the locking position of the coupling (9).

10. Coupling according to claim 9, **characterised in that** the fitting aid (82) covers the upper border of the valve part (91) at the gas bottle end.

11. Coupling device for a coupling (9) according to one of claims 1 to 10, **characterised in that** the coupling device (91A) is constructed in the form of a sleeve engaging over the neck (81A) of the gas bottle (8) and to be fastened to the latter and in its interior has a free passage for a plunger (53) of the gas feed connector (5) for opening a gas discharge valve (92A) arranged in the neck (81A) of the gas bottle (8) in such a way that the sleeve (91A) and the neck (81) of the bottle form a sealing connection with the gas feed connector (5).

12. Coupling device according to claim 11, **characterised in that** it possesses an inner screw thread (910) for fastening onto the neck (81A) of the gas bottle (8).

13. Coupling device for a coupling (9) according to one of claims 1 to 10, **characterised in that** the coupling device (91) is constructed as a plug-in member (91) which is connectable to the neck (81) of the gas bottle (8) and in its interior carries a valve (92) which is opened when the plug-in member (91) is inserted into the nozzle connecting part (54) of the gas feed connector (5), wherein the plug-in member (91) and the neck (81) of the bottle form a sealing connection with the gas feed connector (5).

14. Coupling device for a coupling according to one of claims 1 to 10, **characterised in that** the coupling device is formed by a neck forming a plug-in part of a gas bottle, wherein a valve is integrated into the neck and the neck is provided with an outer neck contour which corresponds to that of an adapter or a plug-in part.

15. Gas bottle (8) for connecting to a carbonising device by means of a coupling (9) having a coupling device according to claim 14, **characterised in that** the neck plug-in part of the gas bottle possesses a groove (91, 91A) for establishing a form-fitting locking connection between the neck plug-in part and the nozzle connecting part (54).

## Revendications

1. Couplage pour le raccordement d'une bouteille de gaz (8) à une conduite d'amenée de gaz (51) dans un dispositif (1) de gazéification de liquide contenu dans une bouteille fermée (4) dotée d'une ouverture de sortie pouvant être fermée et ménagée dans la région du goulot (40) ainsi que d'une ouverture d'entrée de gaz (33), le dispositif (1) étant équipé
- d'un dispositif d'insufflation de gaz (3) pour être relié de façon étanche à la bouteille de liquide (4) afin d'insuffler du gaz dans le liquide,
- d'un dispositif de maintien de la bouteille de liquide (4) dans une position prédéterminée dans laquelle le dispositif d'insufflation de gaz (3) est relié fonctionnellement à la bouteille de liquide (4),
- d'un boîtier (10) entourant au moins partiellement la bouteille de liquide (4) et destiné à loger au moins la bouteille de liquide (4) dans ladite position,
- d'un élément de commande (7) accessible de l'extérieur et destiné à ouvrir le dispositif d'insufflation de gaz (3) ainsi qu'à ouvrir un clapet de sortie de gaz (92, 92A) laissant sortir du gaz de la bouteille de gaz (8) raccordée et
- d' un raccord d'amenée de gaz (5) placé au niveau du boîtier (10), pouvant être relié à une bouteille de gaz (8) et destiné au gaz à insuffler dans la bouteille de liquide (4), le raccord d'amenée de gaz (5) comportant une pièce de raccordement (54) au couplage qui maintient la bouteille de gaz (8) dans la liaison avec le couplage, et le trajet du gaz dans le couplage étant ouvert après l'établissement de la liaison avec le couplage en ouvrant le clapet de sortie de gaz (92, 92A) au moyen de l'élément de commande (7),
**caractérisé en ce que** le couplage est formé par un couplage rapide (9) fait partie du raccord d'amenée de gaz (5) et destiné au raccordement d'une bouteille de gaz (8) insérable de façon échangeable dans le dispositif (1 ) et comportant un dispositif de couplage formant un pièce enfichable (91, 91 A) et, en tant que pièce de raccordement, une pièce de raccordement formant manchon (54) qui reçoit la pièce enfichable (91, 91A) de façon étanche et par verrouillage de forme et adhérence, la pièce enfichable formant la partie maintenant la bouteille de gaz (8).

2. Couplage selon la revendication 1, **caractérisé en ce que** la pièce de raccordement formant manchon (54) comporte des éléments d'encliquetage (57) qui s'engagent dans une gorge d'encliquetage (93) de la pièce enfichable (91, 91A).

3. Couplage selon la revendication 1 ou 2, **caractérisé en ce que** le couplage (9) comporte des clapets (50 ; 53, 92) à ouvrir pour le raccordement, à savoir formés l'un dans la pièce de raccordement formant manchon (54), un autre dans la pièce enfichable (91, 91A) encliquetable dans ladite pièce de raccordement formant manchon et un autre entre les deux pièces, la pièce enfichable (91, 91A) étant reliée à la sortie de la bouteille de gaz (8).

4. Couplage selon l'une des revendications 1 à 3, **caractérisé en ce que** le dispositif de couplage (91 a) est conformé en douille s'engageant sur le goulot (81) de la bouteille de gaz (8) et à fixer sur celui-ci et comporte à l'intérieur un passage libre destiné à un coulisseau (53) du raccord d'amenée de gaz (5) pour ouvrir un clapet de sortie de gaz (92A) disposé dans le goulot (81) de la bouteille de gaz (8) de sorte que le dispositif de couplage (91A) et le goulot (81) de la bouteille forment une liaison étanche avec le raccord d'amenée de gaz (5).

5. Couplage selon la revendication 4, **caractérisé en ce que** le dispositif de couplage (91 A) comporte une taraudage (910) destiné à fixer le goulot (81) de la bouteille de gaz (8).

6. Couplage selon l'une des revendications 1 à 5, **caractérisé en ce que** le dispositif de couplage (91, 91A) peut être serré au moyen d'un manchon (55) qui est monté sur la pièce de raccordement formant manchon (54) et qui est déplaçable dans la direction d'enfichage du dispositif de couplage (91, 91 A) avec rappel en s'opposant à la force d'un ressort disposé entre la pièce de raccordement (54) et le manchon (55), au moins un élément d'encliquetage (57) étant disposé entre le manchon (55) et la pièce de raccordement (54), lequel élément d'encliquetage est déplaçable dans le manchon déplacé contre la force du ressort depuis un espace de réception de la pièce de raccordement (54) pour libérer l'espace de réception de la pièce de raccordement (54) afin d'enficher le dispositif de couplage (91, 91A), et la pièce d'encliquetage (57) venant en liaison d'encliquetage avec un logement (93) formé au niveau du dispositif de couplage (91, 91 A) en étant blocable dans la position d'encliquetage par le manchon (55) ramené par le ressort.

7. Couplage selon l'une des revendications 1 à 6, **caractérisé en ce que** le dispositif de couplage (91, 91 A) est conformé en pièce moulée par injection.

8. Couplage selon l'une des revendications 1 à 7, **caractérisé en ce que** le dispositif de couplage (91 A) est conformé avec une région de bordure amincie (93A) en forme de rebord du côté opposé à la bouteille de gaz (8) et comporte à l'intérieur des moyens d'étanchéité (95A) destinés à la surface frontale de la sortie de la bouteille de gaz.

9. Couplage selon l'une des revendications 1 à 8, **caractérisé en ce que** le dispositif de couplage (91, 91 A) comporte un auxiliaire de montage associé (82) se présentant sous la forme d'un manchon enfichable sur le goulot (81) de la bouteille et comportant des emplacements de moindre résistance mécanique (83) qui peuvent être brisés lorsque la position d'encliquetage du couplage (9) est atteinte.

10. Couplage selon la revendication 9, **caractérisé en ce que** l'auxiliaire de montage (82) recouvre le bord supérieur de la partie de clapet (91 ) du côté de la bouteille de gaz.

11. Dispositif de couplage d'un couplage (9) selon l'une des revendications 1 à 10, **caractérisé en ce que** le dispositif de couplage (91A) est conformé en douille s'engageant sur le goulot (81 A) de la bouteille de gaz (8) et destiné à fixer à celui-ci et il comporte à l'intérieur un passage libre destiné à un coulisseau (53) du raccord d'amenée de gaz (5) pour ouvrir un clapet de sortie de gaz (92A) disposé dans le goulot (81 A) de la bouteille de gaz (8) de sorte que la douille (91 A) et le goulot (81 A) de la bouteille forment une liaison étanche avec le raccord d'amenée de gaz (5).

12. Dispositif de couplage selon la revendication 11, **caractérisé en ce qu'**il comporte un taraudage (910) destiné à fixer le goulot (81 A) de la bouteille de gaz (8).

13. Dispositif de couplage d'un couplage (9) selon l'une des revendications 1 à 10, **caractérisé en ce que** le dispositif de couplage (91 ) est conformé en corps enfichable (91) qui peut être relié au goulot (81 A) de la bouteille de gaz (8) et qui supporte à l'intérieur un clapet (92) qui est ouvert lorsque le corps enfichable (91) est inséré dans la pièce de raccordement formant manchon (54) du raccord d'amenée de gaz (5), le corps enfichable (91) et le goulot (81) de la bouteille formant une liaison étanche avec le raccord d'amenée de gaz (5).

14. Dispositif de couplage d'un couplage selon l'une des revendications 1 à 10, **caractérisé en ce que** le dispositif de couplage est formé par un goulot, formant une pièce enfichable, d'une bouteille de gaz, un clapet étant intégré dans le goulot et le goulot présentant un contour de goulot extérieur qui correspond à celui d'un adaptateur ou d'une pièce enfichable.

15. Bouteille de gaz (8) pour le raccordement à un dispositif de gazeification au moyen d'un couplage (9) qui comporte un dispositif de couplage selon la revendication 14, **caractérisé en ce que** la pièce enfichable sur le goulot de la bouteille de gaz comporte une gorge (91, 91A) pour réaliser une liaison à blocage par verrouillage de forme entre la pièce enfichable sur le goulot et une pièce de raccordement formant manchon (54).
